# EUROPÄISCHE PATENTSCHRIFT

(11) **EP 0 339 415 B1**
(45) Veröffentlichungstag und Bekanntmachung des Hinweises auf die Patenterteilung: **25.08.1993**
(21) Anmeldenummer: 89106815.7
(22) Anmeldetag: 17.04.1989
(51) Int. Cl.: C08F 251/02

(54) **Wässrige Celluloseesterdispersionen und ihre Herstellung**
Aqueous cellulose ester dispersions and their preparation
Dispersions aqueuses d'ester de cellulose et leur préparation

(30) Priorität: 28.04.1988 DE 3814284
(43) Veröffentlichungstag der Anmeldung: 02.11.1989
(73) Patentinhaber: Wolff Walsrode Aktiengesellschaft, D-29655 Walsrode (DE)
(72) Erfinder: Hoppe, Lutz, Dr., D-3030 Walsrode (DE); Koch, Wolfgang, Dr., D-3036 Bomlitz (DE); Lühmann, Erhard, D-3036 Bomlitz (DE); Piepho, Michael, Dr., D-3032 Fallingbostel 2 (DE)
(74) Vertreter: Zobel, Manfred, Dr.

(56) Entgegenhaltungen:
- GB-A- 2 090 839
- US-A- 4 011 388
- US-A- 4 435 531
- CHEMICAL ABSTRACTS, Band 83, 1975, Seite 81, Zusammenfassung Nr. 44843r, Columbus, Ohio, US; & JP-A-74 115 126 (TORAY INDUSTRIES) 02-11-1974

## Beschreibung

Die Erfindung betrifft wäßrige Celluloseesterdispersionen mit verbesserten Eigenschaften, ein Verfahren zu ihrer Herstellung, daraus hergestellte Lacke und mit den erfindungsgemäßen Dispersionen bzw. Lacken versehene Substrate.

Im Zuge des gestiegenen Umweltbewußtseins finden Lacksysteme mit keinem oder nur geringem Anteil an organischen Lösungsmitteln wachsendes Interesse (vgl. z.B. O. Lückert, Emissionsarm Lackieren, C.R. Vincentz-Verlag, Hannover, 1987).

In der DE-A-2 529 547 wird ein Verfahren zur Herstellung von Dispersionen durch Polymerisation von wäßrigen Monomer-Polymer-Emulsionen beschrieben. Es wird Wasser, ein oberflächenaktives Mittel, mindestens ein Polymer, wie z.B. Celluloseester, und ein Monomeres, in dem das Polymer löslich ist, zu einer Emulsion ermischt und anschließend solchen Bedingungen unterworfen, daß das Monomer innerhalb der Emulsionströpfchen polymerisiert. Hierbei entsteht im Teilchen ein homogenes Gemisch von mindestens zwei linearen Polymerisaten. Unter anderem werden nach diesem Verfahren auch Dispersionen von Celluloseestern, insbesondere von Nitrocellulose und linearen Polyacrylaten, die als homogenes Gemisch vorliegen, erhalten. Als Überzugsmaterial für z.B. Holz eignen sich diese Dispersionen nicht, da sie ohne Koalesziermittel nicht trübungsfrei auftrocknen und eine niedrige Oberflächenhärte haben, die sich z.B. durch eine unzureichende Schleifbarkeit äußert.

Um diesen Nachteil des nicht-trübungsfreien Auftrocknens zu vermeiden, wird in der DE-A 3 007 936 ein Verfahren beschrieben, bei dem das bereits beschriebene Dispersionsteilchen zusätzlich fettsäuremodifizierte Harze enthält. Zwar wird die Trübung des Lackfilmes hierdurch geringer, aber auch hier sind Lösungsmittel als Koalesziermittel in einem Anteil von mindestens 20 bis 25 Gew.-% im applizierbaren Dispersionslack notwendig.

In US-A 4 435 531 wird die Verwendung von Monomeren in Celluloseester-Dispersionen beschrieben. Gleichzeitig wird jedoch mit organischen Lösungsmitteln und ohne Emulgator gearbeitet. Die obengenannten Nachteile treffen daher auch auf den Gegenstand dieses Dokuments zu.

Aufgabe der vorliegenden Erfindung war es, verbesserte lösungsmittelarme bzw. lösungsmittelfreie Celluloseesterdispersionen zur Verfügung zu stellen, die ohne Koalesziermittel trübungsfrei auftrocknen und eine verbesserte Oberflächenhärte haben, so daß sie ausgezeichnet schleifbar sind.

Gegenstand der Erfindung ist eine Polymerdispersion aus einer wäßrigen kontinuierlichen Phase und darin dispergierten Teilchen T die einen Celluloseester und polymerisierte Monomere enthalten, dadurch gekennzeichnet, daß
I. wenigstens zwei polymerisierte Monomere A und B zusammen mit dem Celluloseester wenigstens im Kern der Teilchen T enthalten sind
II. A ein Monomer folgender Formel mit einer polymerisierbaren Doppelbindung ist 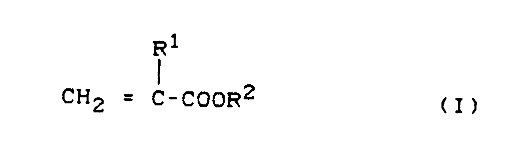 worin bedeuten
   - R¹: ein Wasserstoffatom oder eine Alkylgruppe mit 1 bis 4 C-Atomen, insbesondere Methyl
   - R²: Wasserstoff, ein Alkylrest mit 1 bis 20 C-Atomen, ein Cycloalkylrest mit 5 oder 6 Kohlenstoffatomen, ein Rest -(CHR³-CHR⁴-O)ₙ-R⁵, Aryl, insbesondere Phenyl, Aralkyl, insbesondere Benzyl
   - R³, R⁴, R⁵: Wasserstoff, Alkyl mit 1-6 C-Atomen, insbesondere Methyl oder Ethyl
   - n: eine ganze Zahl von 1 bis 50
III. B ein Monomer mit wenigstens zwei polymerisierbaren Doppelbindungen ist.
IV. In der Dispersion ein Emulgator E enthalten ist.

Der Rest R² kann selbst weiter substituiert sein. In einer bevorzugten Ausführungsform ist der Substituent R² mit einer löslichmachenden Gruppe, insbesondere einer Sulfogruppe substituiert, ein besonders bevorzugter Rest R² ist 2-Sulfoethyl. In einer anderen besonders bevorzugten Ausführungsform bedeutet R² eine Alkylgruppe mit 3-6 C-Atomen, die mindestens eine OH-Gruppe enthält, insbesondere Hydroxyethyl.

In einer bevorzugten Ausführungsform haben die Teilchen T einen Durchmesser kleiner als 10 µm, vorzugsweise kleiner als 4 µm. In einer bevorzugten Ausführungsform sind in den Teilchen T Celluloseester sowie die polymerisierten Monomeren A und B im gesamten Teilchen gleichmäßig verteilt. In einer anderen bevorzugten Ausführungsform bestehen die Teilchen T aus einem Kern K und wenigstens einer davon in der Zusammensetzung unterschiedlichen Hülle H. In diesem Falle sind vorzugsweise Celluloseester, polymerisiertes Monomer B und wenigstens ein Teil des polymerisierten Monomeren A im Kern der Teilchen homogen verteilt. In einer besonders bevorzugten Ausführungsform ist dabei das Verhältnis von polymerisierten Monomeren A zu polymerisierten Monomeren B in der Hülle H größer als im Kern. Die Teilchen T können neben einem Kern auch mehrere Hüllen H unterschiedlicher Zusammensetzung oder teilweise gleicher Zusammensetzung aufweisen.

In einer weiteren bevorzugten Ausführungsform enthalten die erfindungsgemäßen Dispersionen 5 bis 40, insbesondere 5 bis 25 Gew.-Teile Celluloseester
5-55 Gew.-Teile des polymerisierte Monomeren A
0,1-30 Gew.-Teile des polymerisierte Monomeren B
0,2 bis 10, insbesondere 0,5 bis 5 Gew.-Teile Emulgator E
mindestens 30 Gew.-Teile Wasser
0 bis 10, insbesondere 0 bis 5 Gew.-Teile eines Harzes
0 bis 25, insbesondere 5 bis 15 Gew.-Teile eines Weichmachers
0 bis 10, insbesondere 0 bis 5 Gew.-Teile eines organischen Lösungsmittels.

Gegenstand der Erfindung ist weiterhin ein Verfahren zur Herstellung einer erfindungsgemäßen Dispersion, dadurch gekennzeichnet, daß man die Monomeren A und B in Gegenwart eines Celluloseesters und eines Emulgators E in wäßriger Phase polymerisiert.

Gegenstand der Erfindung ist weiterhin ein Verfahren zur Herstellung von Lacken unter Verwendung der erfindungsgemäßen Dispersionen und Zufügen von üblichen Lackinhaltsstoffen, insbesondere von Gleitmitteln, Glanzverbesserungsmitteln, Verlaufmitteln, Pigmenten, Füllstoffen, Harzen, Weichmachern und gegebenenfalls Lösungsmitteln.

Die polymerisierten Monomeren A können zu einem Teil, vorzugsweise bis zu 30 Gew.-%, insbesondere zu 5 bis 20 Gew.-% durch wenigstens eines der folgenden Monomeren in polymerisierter Form ersetzt werden:
1. Styrol und/oder substituiert Styrole der nachstehenden allgemeinen Formel: 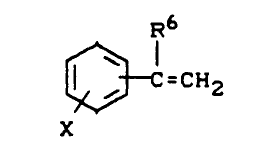 wobei R⁶ ein H oder -CH₃ und X ein Wasserstoff- oder Halogenatom (z.B. ein Chlor- oder Bromatom) oder eine Methylgruppe bedeutet.
2. Vinylester wie Vinylacetat, Vinylpropionat und/oder -butyrat. Bevorzugt wird Vinylacetat.
3. Vinylchlorid und/oder Vinylidenchlorid.
4. Ein Monomer der nachstehenden allgemeinen Formel 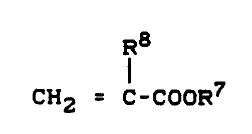 in der R⁸ H oder CH₃ und R⁷ eine Alkylgruppe mit 3 bis 6 C-Atomen, die mindestens eine OH-Gruppe enthält, darstellen.
5. Außerdem können Acrylnitril, Methacrylnitril oder Acrylamid zugegen sein.
6. Umsetzungsprodukte aus Hydroxyethylacrylat, Hydroxypropylacrylat, Hydroxypropylmethacrylat oder Hydroxyethylmethacrylat mit Mono-Isocyanaten oder Epoxiden.
7. Eine allylethergruppenhaltige Verbindung mit nur einer polymerisierbaren Doppelbindung.

Bei den Monomeren B handelt es sich um Monomere oder Prepolymere, die mehr als eine polymerisierbare Doppelbindung pro Molekül Monomer oder Prepolymer enthalten, wie z.B. Epoxy-poly-acrylate, Polyester-poly-acrylate oder Polyurethan-poly-acrylate oder den entsprechenden Methacrylaten oder allylethermodifizierte Verbindungen.

Zur Herstellung der Epoxy-poly-acrylate oder -Methacrylate werden vorzugsweise Polyepoxidverbindungen mit mehr als einer 1,2-Epoxidgruppe pro Molekül, vorzugsweise 2 bis 6, insbesondere 2 bis 3, 1,2-Epoxidgruppen verwendet und mit Acrylaten umgesetzt.

Die zu verwendenden Polyepoxidverbindungen können Polyglycidylether mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; aus Novolaken (d.h. aus Umsetzungsprodukten von ein- oder mehrwertigen Phenolen mit Aldehyden, insbesondere Formaldehyd in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. GB-A-1 017 612), aus Polyphenolen, die durch Kondensation von Phenolen und langkettigen, mindestens zwei Halogenatome enthaltenden Halogenparaffinen erhalten wurden (vgl. GB-A-1 024 288).

Weiter seien genannt Glycidylether mehrwertiger Alkohole, beispielsweise aus 1,4-Butandiol, 1,6-Hexandiol, Glycerin und Trimethylolpropan -evtl. auch alkoxyliert-, Pentaerythrit und Polyethylenglykolen. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyl-trimethylentrisulfon.

Außerdem kommen in Frage: Glycidylester mehrwertiger aromatischer, gesättigter und ungesättigter aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können und Glycidylester vom Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel 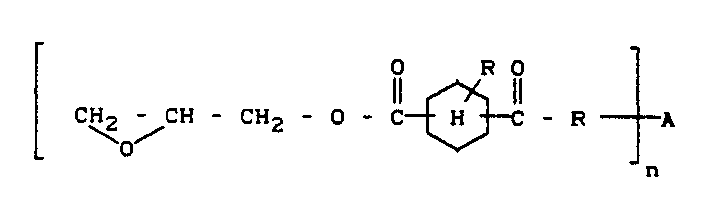
worin A einen mindestens zweiwertigen Rest eines gegebenenfalls durch Sauerstoff und/oder cycloaliphatische Ringe unterbrochenen, aliphatischen Kohlenwasserstoffs oder den zweiwertigen Rest eines cycloaliphatischen Kohlenwasserstoffs, R Wasserstoff oder Alkylreste mit 1 bis 3 C-Atomen und n eine Zahl zwischen 2 bis 6 bedeuten, oder Mischungen von Glycidylcarbonsäureestern der angegebenen allgemeinen Formel (vgl. GB-A-1 220 702).

Die Herstellung der geeigneten Epoxidverbindungen und ihre Umsetzung sind in der DOS 2 534 012 und DOS 2 631 949 offenbart.

Weiterhin können als ungesättigte Prepolymere Umsetzungsprodukte von öl- und fettsäurefreien, gegebenenfalls ungesättigten Polyestern mit Acryl- oder Methacrylsäure verwendet werden (= Polyesteracrylate) mit wenigstens zwei polymerisierbaren Doppelbindungen, pro Molekül.

Als Polyester werden bevorzugt solche verwendet, die man durch Polykondensation nach bekannten Verfahren aus Alkoholen und Carbonsäuren herstellen kann, wie sie z.B. in Römpp's Chemielexikon, Bd. 1, S. 202, Frank'sche Verlagsbuchhandlung, Stuttgart, 1966, definiert oder bei D.H. Solomin, The Chemistry of Organic Filmformers, S. 75 bis 101, John Wiley & Sons Inc., New York, 1967, sowie in H. Wagner und H.F. Sarx, Lackkunstharze, Carl Hanser Verlag, München, 1971, S. 96 bis 113, beschrieben sind.

Für die Synthese der Polyester bevorzugte Säurekomponenten sind aliphatische, cycloaliphatische gesättigte oder ungesättigte und/oder aromatische mehrbasige Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Sebacinsäure, Azelainsäure, Trimellithsäure und Trimellithsäureanhydrid, Pyromellithsäureanhydrid, Fumarsäure und Maleinsäure, Phthalsäureanhydrid ist die gebräuchlichste Säurekomponente.

Für die Synthese der Polyester bevorzugte Alkohole sind aliphatische, cycloaliphatische und/oder araliphatische Alkohole mit 1 bis 15, vorzugsweise 2 bis 6 C-Atomen, und 1 bis 6, vorzugsweise 1 bis 4, an nichtaromatische C-Atome gebundenen OH-Gruppen pro Molekül, z.B. Glykole wie Ethylenglykol, Propandiol-1,2 und -1,3, Butandiol-1,2, -1,3 und -1,4, 2-Ethylpropandiol-1,3, 2-Ethylhexandiol-1,3, Neopentylglykol, 2,2,4-Trimethylpentandiol-1,3, Hexandiol-1,6, Cyclohexandiol-1,2 und -1,4, 1,2-und 1,4-Bis-(hydroxymethyl)-cyclohexan, Adipinsäure-bis-(ethylenglykolester); Etheralkohole wie Di- und Triethylenglykol bzw. höheren Polyetheralkoholen, Dipropylenglykol, oxalkylierte Bisphenole mit zwei C₂/C₃-Oxalkylgruppen pro Molekül, perhydrierte Bisphenole; Butantriol-1,2, Hexantriol-1,2,6- Trimethylolpropan, Trimethylolhexan, Glycerin, Pentaerythrit, Dipentaerythrit, Mannit und Sorbit; kettenabbrechende, einwertige Alkohole mit 1 bis 8 Kohlenstoffatomen wie Propanol, Butanol, Cyclohexanol und Benzylalkohol. Die gebräuchlichsten Alkohole sind Glycerin, Trimethylolpropan, Neopentylglykol und Pentaerythrit und deren Alkoxylierungsprodukte.

Es können auch die Veresterungsprodukte der aufgeführten mehrwertigen Alkoholkomponenten mit Acryl- und Methacrylsäure verwendet werden, wie z.B. Hexandioldiacrylat, Trimethylolpropantriacrylat, ethoxyliertes Trimethylolpropantriacrylat, Tripropylenglykoldiacrylat, Glycerylpropoxyatriacrylat.

Weiterhin sind zur Herstellung der erfindungsgemäßen Dispersionen Kondensationsprodukte aus Di- oder Polyisocyanaten mit n freien Isocyanatgruppen mit n Molen Hydroxyalkyl(meth)acrylaten geeignet. Diese werden durch Umsetzung aus aliphatischen, cycloaliphatischen und/oder aromatischen Polyisocyanaten, beispielsweise Tetramethylendiisocyanat, Hexamethylendiisocyanat, 4,4'-Dicyclohexylmethan-diisocyanat, 4,4'-Dicyclohexyldimethyl-methan-diisocyanat, Isophorondiisocyanat, Diphenylmethandiisocyanat, Toluylendiisocyanat, Naphthylendiisocyanat, 4,4'-Diphenyletherdiisocyanat, gegebenenfalls daraus hervorgehende Di- oder Trimere sowie deren Umsetzungsprodukte mit untergeordneten Menge wasserstoffaktiver Verbindungen, wie z.B. mehrwertigen Alkoholen und/oder Etheralkoholen, die bereits oben genannt sind und gegebenenfalls ionische Gruppierungen enthalten können, polyfunktionellen Aminen und/oder Aminoalkoholen, durch Umsetzung mit hydroxylgruppenhaltigen Acrylsäureestern, wie Hydroxyethylacrylat, Hydroxypropylacrylat und/oder Butandiolmonoacrylat oder den entsprechenden Methacrylatverbindungen hergestellt.

Ferner können bei der Herstellung der erfindungsgemäßen Dispersion allylethergruppenhaltige Verbindungen, wie z.B. Trimethylolpropan-, Pentaerithrit- und/oder Glycerin-di- und/oder -triallylether oder allylethermodifizierte Polyester zugegen sein.

Als Celluloseester eignen sich vorzugsweise Nitrocellulosen aller Viskositätsstufen oder plastifizierte Nitrocellulose oder deren Mischungen. Ganz besonders geeignet ist Nitrocellulose der üblichen Lack-Nitrocellulosequalitäten, d.h. Cellulosesalpetersäureester mit einem Stickstoffgehalt von 10,2 bis 12,6 Gew.-%.

Als gegebenenfalls mitzuverwendende Weichmacher können übliche Weichmacher, wie z.B. die Ester von aliphatischen Monocarbonsäuren, wie Cetylacetat, Glykoldiacetat, Glycerintriacetat, Stearate, Ricinolacetate, aromatische Dicarbonsäuren, wie z.B. Dibutylphthalat, Dioctylphthalat, aliphatische Tricarbonsäuren, wie z.B. Tributylcitrat, anorganische Säuren, wie z.B. Tributylphosphat, Öle, wie Rizinusöl oder Leinöl, und die Ethoxylierungs-bzw. Epoxydierungsprodukte der genannten Verbindungen, wie z.B. ethoxyliertes Rizinusöl oder epoxydiertes Sojaöl eingesetzt werden.

Geeignete Emulgatoren für wäßrige Medien bei der Herstellung der erfindungsgemäßen Dispersionen sind in
"Emulsions: Theory and Practice", Paul Becker, Kapitel 6, Reinhold Publishing Corp., New York (1965) und in Mc Cutcheon's,
"Detergents and Emulsifiers, 1972 Annual",
"Tenside, Textilhilfsmittel, Waschrohstoffe", Dr. K. Lindner, Wissenschaftliche Verlagsgesellschaft, Stuttgart, 1964
beschrieben. Beispiele sind anionaktive Substanzen, die Carboxylate, z.B. Fettsäureseifen (abgeleitet von Laurin-, Stearin- oder Ölsäure) und Acylderivate von Sarcosin (Methylglycin), Sulfate, z.B. Natriumlaurylsulfat, sulfatierte natürliche Öle und Ester (Türkisch-Rot-Öl) und Alkylarylpolyethersulfate, Sulfonate, z.B. Alkylarylpolyethersulfonate, Dodecylbenzolsulfonat, Isopropylnaphthalinsulfonate und Sulfosuccinate sowie Sulfosuccinamate, Phosphorsäureester, z.B. langkettige Fettalkoholteilester komplexer Phosphate und Orthophosphorsäureester von polyethoxylierten Fettalkoholen.

Außerdem können Carboxylate, Sulfate, Sulfonate, Phosphate, Phosphite oder Phosphonate von nichtionogenen oberflächenaktiven Alkyl-, Aryl-, Alkylglykolethern, acylierten bzw. alkylierten Alkanolaminpolyglykolethern oder Copolymerisaten aus Ethylenoxid und/oder Propylenoxid verwendet werden.

Die vorgenannten anionaktiven Substanzen können in Form der Natrium-, Kalium-, Lithium-, Ammonium- oder Aminsalze vorliegen; am gebräuchlichsten sind die Natrium- und Ammoniumsalze.

Ein Beispiel für eine amphotere Substanz ist Laurylammoniumsulfonsäurebetain.

Beispiele für nichtionogene Substanzen sind ethoxylierte ein- und mehrwertige Alkohole (d.h. die Ethylenoxidderivate dieser Alkohole), wie z.B. Octyl- und Nonylphenolderivate, Ethylenoxid/Propylenoxid-Blockcopolymere, Ester (z.B. Glycerylmonostearat), ethoxylierte Öle, wie z.B. Ethoxylierungsprodukte von Rizinus- oder Sojaöl, Dehydratisierungsprodukte von Sorbit, z.B. Sorbitanmonostearat und Polyethylenoxidsorbitanmonolaurat sowie Laurinsäureisopropanolamid.

Am häufigsten verwendet werden anionenaktive und/oder nichtionogene Substanzen.

Ebenfalls einsetzbar (entweder allein oder in Kombination mit den vorstehend beschriebenen oberflächenaktiven Substanzen) sind Kolloide und hochmolekulare Stabilisatoren, wie komplexe Polysaccharide (Gummi Arabicum und Traganth), Amylopectin, wasserlösliche Cellulosederivate (z.B. Natriumcarboxymethylcellulose, Hydroxyethyl- und Hydroxypropylcellulose), Polyvinylalkohol (z.B. in teilweise verseifter Form), Alginate und Carageenan.

Mit der Wahl der richtigen oberflächenaktiven Mittel und Stabilisatoren befaßt sich ein umfangreiches Schrifttum einschließlich der vorgenannten Literaturstelle. Häufig ist man auf das Experiment angewiesen. Typische Anteile liegen im Bereich von etwa 0,2 bis 10 Gew.-%.

Als gegebenenfalls mitverwendete Harze können übliche Harze, wie z.B. Alkyd-, Maleinsäure-, Phenol-Formaldehyd-, Xylol-Formaldehyd-, Keton-, Sulfonamid-, Aldehyd-, Amin- und Epoxyharze, Carbamidsäureester, Kumaron-Inden-Harze, Ester der Saccharose, Vinyl-, Acrylat- und deren Copolymerisationsharze, wie sie z.B. in
"Karsten-Lackrohstofftabellen", 8. Auflage, Curt R. Vincentz Verlag, Hannover, 1987
beschrieben sind, eingesetzt werden. So können z.B. auch als Polymerisationskeime separat hergestellte wäßrige Polyurethanemulsionen vorgelegt werden, zu welchen die vorher aufgeführten Substanzen gegeben werden können.

Als evtl. mitzuverwendende Lösungsmittel können solche verwendet werden, die entweder nach der Herstellung azeotrop abdestilliert werden können, wie z.B. Ester, wie Methyl-, Ethyl-, Propylacetat oder Ketone, wie Aceton, Methylethylketon oder als Koalesziermittel in der Dispersion enthalten bleiben, wie z.B. Glykole, mehrwertige Alkohole, Glykolether sowie Glykoletheracetate.

Je nach Anwendungsgebiet (z.B. Holz-, Metall-, Kunststoff-, Papier-, Leder-, Glas- und Folienlackierung) können noch weitere bekannte Lösungsmittel als Koalesziermittel zugesetzt werden, wobei die Lösungsmittelkonzentration 10 Gew.-% nicht überschreiten sollte. Ferner können der Emulsion, vorzugsweise der wäßrigen Phase, auch solche Stoffe zugesetzt werden, die die Verarbeitung oder anwendungstechnischen Eigenschaften verbessern, wie z.B. Gleitmittel, Glanzverbesserungsmittel, Verlaufsmittel, Pigmente, Farbstoffe und Füllstoffe.

Die erfindungsgemäßen, wäßrigen Dispersionen zeigen hervorragende Eigenschaften als Schutz- und Schmucküberzüge auf diversen Substraten. Da die erfindungsgemäßen Dispersionen trübungsfrei z.B. auch auf Holz auftrocknen, sind Oberflächen mit einer nitrocellulosetypischen Anfeuerung und Schleifbarkeit zu erreichen.

Verfahren zur Herstellung der wäßrigen Emulsion sind allgemein bekannt und z.B. in Kapitel 7 des obengenannten Buches von Becker beschrieben. Die Emulgierung kann erfolgen durch einfaches Verrühren aller Bestandteile der Reaktionsmischung im Reaktionsgefäß, durch Vorlösen des Polymeren in den Monomeren und anschließender Emulgierung dieser Lösung. Emulgiert werden kann des weiteren mit Hilfe der Ultraschallmischmethode, der Düsenmischmethode, durch Einsatz von Mischern mit hoher Scherwirkung sowie durch Kombinationen dieser Methoden. In einer bevorzugten Ausführungsform werden die flüssigen Komponenten vorgelegt.

Die für das Vorlösen der Polymeren in den Monomeren erforderliche Zeit hängt stark von der Löslichkeit des oder der Polymeren, vom Molekulargewicht und von den Mengenverhältnissen ab. Sie kann variieren zwischen einigen Minuten und mehreren Tagen, bevorzugt werden Mischungen mit Lösezeiten von 10 Minuten bis 5 Stunden.

Die Temperatur kann während der Emulgierung konstant sein oder variiert werden. Sie kann im Bereich von 0 bis 110°C, im Fall des Vorlösens der Celluloseester in den Monomeren bis 150°C liegen, bevorzugt werden Temperaturen von 20 bis 100°C.

Die Emulgierung kann in jedem beliebigen Gefäß stattfinden, vorzugsweise jedoch in dem zur Polymerisation verwendeten Reaktor. Das System kann offen (Normaldruck) oder verschlossen sein. Bevorzugt werden Druckbehälter (Autoklaven). Die Druckbedingungen während der Emulgierung hängen vom Dampfdruck der Monomeren und sonstigen Zusätzen sowie von der angewendeten Temperatur ab.

Durch radikalische Polymerisation wird die wäßrige Celluloseester-Monomer-Emulsion in eine wäßrige Polymerdispersion umgewandelt. Die Dispersion besteht aus einem homogenen Gemisch von Teilchen, die aus mindestens zwei Polymeren aufgebaut sind. Der innere Aufbau der Teilchen kann homogen sein oder durch eine ausgeprägte Kern-Schale-Struktur gekennzeichnet sein. Auch fließende Übergänge in der radialen Zusammensetzung sind möglich. Der Unterschied zwischen Kern und Schale kann chemischer Natur (unterschiedliche Polymer- und Copolymerzusammensetzung) oder physikalischer Natur (unterschiedliche Molekulargewichte, Taktizitäten, Verzweigungs- bzw. Vernetzungsgrade oder Glastemperaturen) sein.

Der Reaktionsmechanismus der Polymerisation kann einer Suspensions- oder einer Emulsionspolymerisation entsprechen. Auch können beide Mechanismen parallel oder in Folge, bei beliebiger Reihenfolge, zum Tragen kommen.

Die Polymerisation findet vorzugsweise im gleichen Gefäß statt, in dem die wäßrige Emulsion hergestellt wurde.

Besonders bevorzugt sind Drucksysteme (Autoklaven). Je nach der Art der Bestandteile des Ansatzes findet die Polymerisation unter Normaldruck oder erhöhtem Druck statt. Bewährt hat sich auch die Überlagerung des Reaktionsgemisches mit einem Inertgas.

Die Polymerisation kann kontinuierlich, diskontinuierlich oder nach dem Kaskaden-Prinzip durchgeführt werden. Die Reaktion erfordert einen radikalbildenden Initiator, der auf einmal, portionsweise oder kontinuierlich zugegeben wird. Die Zugabe kann in Substanz oder in wäßriger oder organischer Lösung erfolgen.

Neben einzelnen Initiatoren können auch Gemische mehrerer Initiatoren zum Einsatz kommen. Bevorzugt sind Mischungen von Initiatoren unterschiedlicher Zerfallsgeschwindigkeiten und Gemische von wasser- und öllöslichen Initiatoren.

Die Polymerisationstemperatur liegt im Bereich von 0 bis 180°C, vorzugsweise von Raumtemperatur bis 100°C. Die Polymerisationsdauer kann einige Minuten bis mehrere Stunden betragen und liegt vorzugsweise im Bereich von 1 bis 8 Stunden.

Der Aufbau der Kern-Schalen-Struktur kann durch Verwendung von Monomeren mit unterschiedlicher Reaktivität oder durch Zugabe, kontinuierlich oder diskontinuierlich, eines oder mehrerer Monomerer während oder nach einer ersten Polymerisation des vorgelegten Reaktionsgemisches erfolgen. Aufbau und Eigenschaften des Dispersionsteilchens lassen sich so durch Wahl der Monomeren, des Zugabezeitpunktes sowie der Mengenverhältnisse beliebig steuern.

Als Initiatoren eignen sich wasser- und öllösliche, radikalbildende Verbindungen. Beispiele für geeignete wasserlösliche Verbindungen sind Natrium-, Kalium- und Ammoniumpersulfat und Wasserstoffperoxid. Diese können für sich oder zusammen mit Reduktionsmitteln, wie Eisen-II-sulfat, Natriumsulfit, Natriumthiosulfat oder Ascorbinsäure verwendet werden.

Beispiele für einsetzbare öllösliche Verbindungen sind Peroxide und Hydroperoxide, wie Benzoylperoxid, Laurylperoxid und Cyclohexanonhydroperoxid, Percarbonate, wie Myristinpercarbonat und Azoverbindungen, wie Azobisisobutyronitril.

Die Anteile der verwendeten Initiatoren liegen im Bereich von 0,01 bis 2 Gew.-%, vorzugsweise von 0,01 bis 0,5 Gew.-%, bezogen auf die Summe der polymerisierbaren Verbindungen. Die Molekulargewichte können in der üblichen Weise durch Zusatz von Kettenüberträgern und Reglern begrenzt werden.

Die Viskosität der wäßrigen Polymerdispersion liegt vorzugsweise im Bereich von 2 bis 1000 mPa.s, vorzugsweise im Bereich von 5 bis 500 mPa.s.

Der mittlere Teilchendurchmesser liegt vorzugsweise im Bereich von 0,01 bis 10 µm, vorzugsweise im Bereich von 0,05 bis 4 µm. Die Teilchengrößenverteilung ist in der Regel monomodal. Der Feststoffanteil der Polymerdispersion liegt im Bereich von 10 bis 80 Gew.-%, vorzugsweise im Bereich von 20 bis 60 Gew.-%.

Es ist ferner möglich, die Dispersion durch geeignete Verfahren wie z.B. Gefriertrocknung, Sprühtrocknung in ein Pulver zu überführen.

### Beispiel 1

In einem 1 l-Glasreaktor werden 224,4 g Butylacrylat, 13,2 g Hexandioldiacrylat, 5 g Acrylsäure und 220 g wasserfeuchte Nitrocellulose Normtyp E 27 (enthält 146 g trockene Nitrocellulose) vorgelegt. Nach einer Rührzeit von 1,5 Stunden wird aus dem Gemisch durch Zutropfen einer Emulgatorlösung, bestehend aus 17,6 g Natriumdodecylbenzolsulfonat, 8,8 g Alkylphenoxypoly(ethylenoxy)-ethylester der Phosphorsäure (Gafac® RE 610), 0,5 g Entschäumer und 5,3 g NaHCO₃ in 360 ml Wasser, eine Emulsion hergestellt. Im Anschluß an die Emulgierphase werden 0,44 g K₂S₂O₈ in 20 g H₂O zugegeben. Der Ansatz wird unter ständigem Rühren in 1,5 Stunden auf 70°C Reaktionstemperatur erwärmt. Nach 4 Stunden erfolgt zum Aufbau einer Kern-Schale-Struktur die Zugabe von 52,8 g Butylmethacrylat und 0,44 g K₂S₂O₈, gelöst in 20 ml Wasser. Die Reaktion ist nach weiteren 4 Stunden bei 70°C beendet.
Feststoffgehalt der Dispersion: 48 Gew.-%
Mittlerer Partikeldurchmesser: 0,3 µm (gemessen mit dem Master Sizer, Fa. Mütek GmbH)

### Beispiel 2

Die Dispersionsherstellung erfolgte, wie in Beispiel 1 beschrieben, jedoch wurden statt 13,2 g Hexandioldiacrylat, 13,2 g des Umsetzungsproduktes aus 1 Mol Hexamethylendiisocyanat und 2 Molen Hydroxyethylacrylat eingesetzt.
Feststoffgehalt der Dispersion: 48 Gew.-%
Mittlerer Partikeldurchmesser: 0,4 µm

### Beispiel 3

Zu dem Monomerengemisch aus 216 g Butylacrylat, 24 g Hydroxyethylacrylat, 5 g Acrylsäure und 36 g eines allylethermodifizierten, ungesättigten Polyesters (Roskydal® 850 N) werden 200 g wasserfeuchte Nitrocellulose Normtyp E 27 (enthält 130 g trockene Nitrocellulose) gegeben und 2 Stunden gerührt. Innerhalb von 1,5 Stunden wird das Gemisch durch Einrühren einer Emulgatorlösung in eine Emulsion überführt. Die Emulgatorlösung besteht aus 16 g Natriumdodecylbenzolsulfonat, 8 g Alkylphenoxypoly(ethylenoxy)-ethylester der Phosphorsäure (Gafac® RE 610), 0,5 g Entschäumer, 4,8 g NaHCO₃ und 360 ml Wasser. Nach der Zugabe von 0,4 g K₂S₂O₈ wird unter Rühren in 30 Minuten auf 70°C aufgeheizt. Einer weiteren Zugabe von 0,4 g K₂S₂O₈ nach 2 Stunden bei 70°C folgt eine Nachreaktion von 4 Stunden bei gleicher Temperatur.
Feststoffgehalt der Dispersion: 50,5 Gew.-%
Mittlerer Partikeldurchmesser: 0,37 µm

### Beispiel 4

Im Monomerengemisch aus 216 g Butylacrylat, 24 g Hydroxyethylacrylat, 5 g Acrylsäure und 12 g Trimethylolpropantriacrylat werden 0,6 g Azobisisobuttersäuredinitril gelöst. Nach Zugabe von 200 g wasserfeuchter Nitrocellulose, Normtyp E 27 (enthält 130 g trockene Nitrocellulose), wird 1 Stunde gerührt. Innerhalb von weiteren 1,5 Stundenwird durch Einrühren eines Emulgatorgemisches aus 16 g Natriumdodecylbenzolsulfonat, 8 g Alkylphenoxypoly(ethylenoxy)-ethylester der Phosphorsäure (Gafac® RE 610) und 0,5 g Entschäumer in insgesamt 400 ml Wasser eine Emulsion erhalten.

Nach 1,5 Stunden Aufheizzeit wird die Temperatur während 2 Stunden auf 70 bis 75°C gehalten. Anschließend wird noch 4 Stunden bei 70°C gerührt.
Feststoffgehalt der Dispersion: 47,5 Gew.-%
Mittlerer Partikeldurchmesser: 0,38 µm

### Beispiel 5

In einem 3 l-Polymerisationsgefäß werden zu 518 g Butylacrylat, 58 g Hydroxyethylacrylat, 12 g Acrylsäure, 29 g Hexandioldiacrylat und 1,4 g Azobisisobuttersäuredinitril, 480 g wasserfeuchte Nitrocellulose, Normtyp E 27 (enthält 312 g trockenes NC), gegeben. Das Gemisch wird 1 Stunde gerührt. Eine Emulsion wird hergestellt, indem während 1,5 Stunden die Emulgatormischung, bestehend aus 38,4 g Natriumdodecylbenzolsulfonat, 19,2 g Alkylphenoxy(ethylenoxy)-ethylester der Phosphorsäure (Gafac® RE 610), 1,5 g Entschäumer und 960 ml Wasser eingerührt wird. Innerhalb vn 2 Stunden wird unter Rühren auf 70°C aufgeheizt. Nach 2 Stunden bei 70 bis 75°C werden 0,96 g K₂S₂O₈, gelöst in 50 ml Wasser, zugesetzt. Anschließend wird noch 4 Stunden bei 70°C gerührt.
Feststoffgehalt der Dispersion: 42,5 Gew.-%
Mittlerer Partikeldurchmesser: 0,42 µm

### Beispiel 6

In einem Monomerengemisch aus 216 g Butylacrylat, 24 g Hydroxyethylacrylat, 12 g Hexandioldiacrylat und 5 g Acrylsäure werden 128 g Nitrocellulose-Chips (enthalten 105 g trockene Nitrocellulose vom Normtyp E 27 und 23 g Dibutylphthalat) gelöst. Innerhalb von 1,5 Stunden wird durch Einrühren einer Emulgatorlösung, bestehend aus 16 g Natriumdodecylbenzolsulfonat, 8 g Alkylphenoxy(ethylenoxy)-ethylester der Phosphorsäure (Gafac® RE 610), 0,5 g Entschäumer und 410 ml Wasser, eine Emulsion gebildet.

Nach der Zugabe von 0,4 g K₂S₂O₈ wird unter Rühren auf die Reaktionstemperatur von 70°C erwärmt. Der Ansatz wird unter ständigem Rühren während 2 Stunden im Temperaturbereich von 70 bis 73°C gehalten. Anschließend erfolgt die Zugabe von 52,3 g Butylacrylat, 0,5 g Trimethylolpropandiacrylat und 0,5 g K₂S₂O₈, gelöst in 20 ml Wasser. Die Reaktionstemperatur von 70°C wird für weitere 2 Stunden konstant gehalten.
Feststoffgehalt der Dispersion: 49,6 Gew.-%
Mittlerer Partikeldurchmesser: 0,6 µm

### Beispiel 7

Es wurde wie in Beispiel 3 verfahren, jedoch wurden eingesetzt:
228 g Butylacrylat
12 g ethoxyliertes Glycerintriacrylat (OTA 480)
4 g Acrylsäure
16 g Dibutylphthalat
200 g wasserfeuchte Nitrocellulose vom Normtyp E 27 (enthält 130 g trockene NC)
Festkörpergehalt der Dispersion: 47 Gew.-%
Mittlerer Partikeldurchmesser: 0,3 µm

### Vergleichsbeispiel 1

Es wurde das Beispiel 2 der DE-PS 2 529 547 nachgearbeitet. Die erhaltene 46 %ige Dispersion wird wie die Beispiele 1 bis 7 geprüft. Es wurde aber kein Koalesziermittel zugesetzt.

### Vergleichsbeispiel 2

Um den erfindungsgemäßen Einfluß der Verbindung der Monomerengruppe B darzustellen, wurde das erfindungsgemäße Beispiel 7 nachgearbeitet, wobei jedoch das ethoxylierte Glycerintriacrylat durch Butylacrylat ersetzt wurde.
Feststoffgehalt der Dispersion: 47 Gew.-%
Mittlerer Partikeldurchmesser: 0,3 µm

### Beurteilung der Filmeigenschaften

Zur Beurteilung
- der Härte,
- der Schleifbarkeit und
- des Aussehens des Filmes
wird die erhaltene Dispersion (ohne Lösungsmittelzusatz) in einer Naßschichtdicke von 150 µm auf eine Glasplatte aufgezogen und 30 Minuten bei 80°C getrocknet. Nach dem Abkühlen wurde die Pendelhärte nach König bestimmt.

Zur Beurteilung der Schleifbarkeit wurden mit dem FEK-Veslic-Gerät (Hersteller Kueny/Schweiz) und einem Schleifpapier mit einer Körnung von 220 und einem Auflagedruck von 1000 g 20 Reibcyclen durchgeführt. Danach wurde das Schleifpapier visuell beurteilt. Sehr gute Schleifbarkeit liegt vor, wenn nur feiner Schleifstaub vorliegt, der sich nicht im Schleifpapier festsetzt. Eine schlechte Schleifbarkeit liegt vor, wenn kein feiner Schleifstaub gebildet wird, sondern das Schleifpapier verklebt ist (das abgeschliffene Lackmaterial läßt sich nicht durch Bürsten aus dem Schleifpapier entfernen).

Das optische Aussehen des Filmes wurde visuell beurteilt.

Die Ergebnisse sind in Tabelle 1 zusammengestellt.

**Tabelle 1**

| Beurteilung der Filmeigenschaften | | | |
|---|---|---|---|
| Beispiel | Pendelhärte nach König (sec) | Schleifbarkeit | Aussehen des Filmes |
| Beispiel 1 | 66 | gut | klar |
| Beispiel 2 | 69 | sehr gut | klar |
| Beispiel 3 | 90 | sehr gut | klar |
| Beispiel 4 | 66 | gut | klar |
| Beispiel 5 | 80 | sehr gut | klar |
| Beispiel 6 | 55 | gut | klar |
| Beispiel 7 | 48 | befriedigend | klar |
| Vergleichsbeispiel 1 | nicht meßbar* | nicht meßbar* | trüb* |
| Vergleichsbeispiel 2 | 39 | sehr schlecht | klar |

| | | | |
|---|---|---|---|
| * Die Dispersion verfilmt nicht | | | |

## Patentansprüche

1. Polymerdispersion aus einer wäßrigen kontinuierlichen Phase und darin dispergierten Teilchen T die einen Celluloseester und polymerisierte Monomere enthalten, dadurch gekennzeichnet, daß
I. wenigstens zwei polymerisierte Monomere A und B zusammen mit dem Celluloseester wenigstens im Kern der Teilchen T enthalten sind
II. A ein Monomer folgender Formel mit einer polymerisierbaren Doppelbindung ist 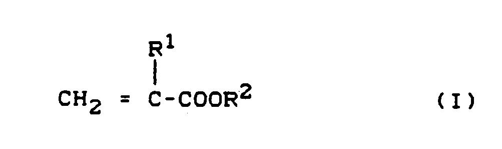 worin bedeuten
R¹ ein Wasserstoffatom oder eine Alkylgruppe mit 1 bis 4 C-Atomen,
R² Wasserstoff, ein Alkylrest mit 1 bis 20 C-Atomen, ein Cycloalkylrest mit 5 oder 6 Kohlenstoffatomen, ein Rest 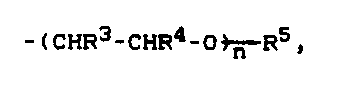 Aryl,
R³, R⁴, R⁵ Wasserstoff und Alkyl mit 1-6 C-Atomen,
n eine ganze Zahl von 1 bis 50
III. B ein Monomer mit wenigstens zwei polymerisierbaren Doppelbindungen ist,
IV. in der Dispersion mindestens ein Emulgator E enthalten ist.

2. Dispersion nach Anspruch 1, dadurch gekennzeichnet, daß die Teilchen T aus einem Kern K und wenigstens einer davon in der Zusammensetzung unterschiedlichen Hülle H bestehen.

3. Dispersion nach wenigstens einem der vorhergehenden Ansprüche, dadurch gekennzeichnet, daß Celluloseester, polymerisiertes Monomer B und wenigstens ein Teil des polymerisierten Monomeren A im Kern der Teilchen homogen verteilt enthalten sind.

4. Dispersion nach wenigstens einem der vorhergehenden Ansprüche, dadurch gekennzeichnet, daß in wenigstens einer Hülle H das Verhältnis des polymerisierten Monomeren A zum polymerisierten Monomeren B größer ist als im Kern des Teilchens.

5. Dispersion nach wenigstens einem der vorhergehenden Ansprüche, dadurch gekennzeichnet, daß der Celluloseester Cellulosenitrat ist.

6. Dispersion nach wenigstens einem der vorhergehenden Ansprüche, dadurch gekennzeichnet, daß die Dispersion im wesentlichen enthält
5 bis 40 Gew.-Teile Celluloseester
5 bis 55 Gew.-Teile an polymerisierten Monomeren A
0,1 bis 30 Gew.-Teile an polymerisierten Monomeren B
0,2 bis 10 Gew.-Teile Emulgator E
mindestens 30 Gew.-Teile Wasser
0 bis 10 Gew.-Teile eines Harzes
0 bis 25 Gew.-Teile eines Weichmachers
0 bis 10 Gew.-Teile eines organischen Lösungsmittels.

7. Dispersion nach wenigstens einem der vorhergehenden Ansprüche, dadurch gekennzeichnet, daß R² eine Alkylgruppe mit 3-6 C-Atomen, die mindestens ein OH-Gruppe enthält, bedeutet.

8. Verfahren zur Herstellung einer Dispersion gemäß Anspruch 1, dadurch gekennzeichnet, daß man die Monomeren A und B in Gegenwart eines Celluloseesters und mindestens eines Emulgators E in wäßriger Phase polymerisiert.

9. Verfahren zur Herstellung von Lacken, dadurch gekennzeichnet, daß man eine Dispersion gemäß wenigstens einem der vorhergehenden Ansprüche mit den üblichen Lackzusatzstoffen versieht.

## Claims

1. Polymer dispersion consisting of an aqueous continuous phase and, dispersed therein, particles T containing a cellulose ester and polymerised monomers, characterised in that
I. at least two polymerised monomers A and B together with the cellulose ester are contained at least in the core of the particles T,
II. A is a monomer corresponding to the following formula having a polymerisable double bond 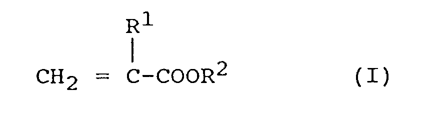 wherein
R¹ denotes a hydrogen atom or an alkyl group having 1 to 4 carbon atoms,
R² denotes hydrogen, an alkyl group having 1 to 20 carbon atoms, a cycloalkyl group having 5 or 6 carbon atoms, a group of the formula 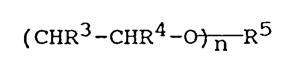 or aryl,
R³, R⁴ and R⁵ stand for hydrogen or alkyl having 1-6 carbon atoms and
n stands for an integer having a value from 1 to 50,
III. B is a monomer having at least two polymerisable double bonds and
IV. the dispersion contains at least one emulsifier E.

2. Dispersion according to Claim 1, characterised in that the particles T consist of a core K and at least one shell H differing from said core in its composition.

3. Dispersion according to at least one of the preceding Claims, characterised in that cellulose esters, polymerised monomer B and at least part of the polymerised monomer A are homogeneously distributed in the core of the particles.

4. Dispersion according to at least one of the preceding Claims, characterised in that in at least one shell H, the ratio of polymerised monomer A to polymerised monomer B is greater than in the core of the particle.

5. Dispersion according to at least one of the preceding Claims, characterised in that the cellulose ester is cellulose nitrate.

6. Dispersion according to at least one of the preceding Claims, characterised in that the dispersion substantially contains
from 5 to 40 parts by weight of cellulose ester,
from 5 to 55 parts by weight of polymerised monomer A,
from 0.1 to 30 parts by weight of polymerised monomer B,
from 0.2 to 10 parts by weight of emulsifier E,
at least 30 parts by weight of water,
from 0 to 10 parts by weight of a resin,
from 0 to 25 parts by weight of a plasticizer and
from 0 to 10 parts by weight of an organic solvent.

7. Dispersion according to at least one of the preceding Claims, characterised in that R² denotes an alkyl group which has 3-6 carbon atoms and contains at least one OH group.

8. A process for the preparation of a dispersion according to Claim 1, characterised in that the monomers A and B are polymerised in the aqueous phase in the presence of a cellulose ester and at least one emulsifier E.

9. A process for the preparation of lacquers, characterised in that conventional lacquer additives are added to a dispersion according to at least one of the preceding Claims.

## Revendications

1. Dispersion de polymères consistant en une phase aqueuse continue dans laquelle sont dispersées des particules T contenant un ester cellulosique et des monomères polymérisés, caractérisée en ce que
I. au moins deux monomères polymérisés A et B sont contenus avec l'ester cellulosique au moins dans le noyau des particules T,
II. A est un monomère de formule ci-après, contenant une double liaison polymérisable 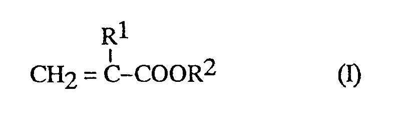 dans laquelle
R¹ représente un atome d'hydrogène ou un groupe alkyle en C₁-C₄,
R² représente l'hydrogène, un groupe alkyle en C₁-C₂₀, un groupe cycloalkyle en C₅ ou C₆, un groupe -(CHR³-CHR⁴-O-)ₙ-R⁵, un groupe aryle,
R³, R⁴, R⁵ représentent l'hydrogène ou des groupes alkyle en C₁-C₆,
n est un nombre entier allant de 1 à 50,
III. B est un monomère à au moins deux doubles liaisons polymérisables,
IV. la dispersion contient au moins un agent émulsionnant E.

2. Dispersion selon la revendication 1, caractérisée en ce que les particules T consistent en un noyau K et au moins une enveloppe H dont la composition est différente de celle du noyau.

3. Dispersion selon au moins une des revendications qui précèdent, caractérisée en ce que l'ester cellulosique, le monomère polymérisé B et au moins une partie du monomère polymérisé A sont contenus en répartition homogène dans le noyau des particules.

4. Dispersion selon au moins une des revendications qui précèdent, caractérisée en ce que, dans au moins une enveloppe H, le rapport entre le monomère polymérisé A et le monomère polymérisé B est plus fort que dans le noyau de la particule.

5. Dispersion selon au moins une des revendications qui précèdent, caractérisée en ce que l'ester cellulosique est du nitrate de cellulose.

6. Dispersion selon au moins une des revendications qui précèdent, caractérisée en ce que la dispersion contient essentiellement
5 à 40 parties en poids d'ester cellulosique,
5 à 55 parties en poids de monomère polymérisé A,
0,1 à 30 parties en poids de monomère polymérisé B,
0,2 à 10 parties en poids d'agent émulsionnant E,
au moins 30 parties en poids d'eau,
0 à 10 parties en poids d'une résine,
0 à 25 parties en poids d'un plastifiant,
0 à 10 parties en poids d'un solvant organique.

7. Dispersion selon au moins une des revendications qui précèdent, caractérisée en ce que R² est un groupe alkyle en C₃-C₆ contenant au moins un groupe OH.

8. Procédé de préparation d'une dispersion selon la revendication 1, caractérisé en ce que l'on polymérise les monomères A et B en phase aqueuse en présence d'un ester cellulosique et d'au moins un agent émulsionnant E.

9. Procédé de préparation de vernis, caractérisé en ce que l'on ajoute les additifs usuels pour vernis à une dispersion selon au moins une des revendications qui précèdent.
